(19) Europäisches Patentamt
European Patent Office
Office européen des brevets

(11) **EP 3 505 259 B1**

(12) **EUROPEAN PATENT SPECIFICATION**

(45) Date of publication and mention
of the grant of the patent:
**17.03.2021 Bulletin 2021/11**

(51) Int Cl.:
***B05B 14/20*** *(2018.01)*

(21) Application number: **17210939.9**

(22) Date of filing: **28.12.2017**

(54) **A SYSTEM FOR PAINT RECYCLING AND A METHOD OF OPERATION**

SYSTEM ZUM RECYCLING VON LACK UND VERFAHREN ZUM BETRIEB

SYSTÈME DE RECYCLAGE DE PEINTURE ET PROCÉDÉ DE FONCTIONNEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**03.07.2019 Bulletin 2019/27**

(73) Proprietor: **Vestel Elektronik Sanayi ve Ticaret A.S.
45030 Manisa (TR)**

(72) Inventor: **Kuyucu, Ömer Gökçe
45030 Manisa (TR)**

(74) Representative: **Peel, Katherine Jane
Page White & Farrer
Bedford House
21 John Street
London WC1N 2BF (GB)**

(56) References cited:
**EP-A1- 0 878 230          EP-A2- 0 141 171
WO-A2-92/19686          DE-A1- 4 415 563
US-A1- 2012 308 732**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present disclosure relates to a paint recycling system and a method of operation of a paint recycling system.

Background

In spray paint application, a spray gun sprays paint through the air onto a substrate. The most common types of spray gun employ compressed air to atomize and direct the paint particles. Spray guns can be either automated or hand-held and have interchangeable heads to allow for different spray patterns.

Automated linear systems are often used for painting substrates such as wood, plastic and metal components. In linear spray systems, components are laid flat on a conveyor belt and then fed into a linear spray system, where automated spray guns are stationed above. When the substrate is directly below the guns, the spray guns begin to paint the substrate.

There are many types of spray guns with respect to their aim usage. However, approximately 60% of the paint reaches the substrate to be painted, with the reminder distributed into the surrounding environment. That is, there is approximately 40% inefficiency in the process. In addition, significant amounts of waste paint, which must be dealt with as contaminated waste, are produced. Automated flat linear spray systems can incorporate a paint-saving system which recovers paint not applied to the substrate.

German patent publication no. DE4415563 relates to a process for the recovery of water-based lacquer.

Summary

According to a first aspect disclosed herein, there is provided a system for paint recycling comprising a pump configured to move a volume of paint to a container, wherein the container is configured for determining the mass of the volume of paint and a controller, wherein the controller is configured to determine an amount of at least one additive to include in the volume of paint based on the volume and determined mass of the paint.

The system may comprise a second pump configured to move the volume of paint from the first container to a second container, wherein the determined amount of additive is added to the paint as it is moved from the first container to the second container.

The system may comprise at least one dosing pump configured to add the determined amount of additive to the paint, wherein the controller is configured to control the at least one dosing pump to add the determined amount of additive to the paint.

The second container may comprise a mixer for mixing paint and additives in the second container.

The second container may be in fluid communication with a spray gun.

The pump configured to move a volume of paint to the container configured for determining the mass of the volume of paint may comprise a screw pump.

The volume of paint may be determined based on the dimensions of the screw pump.

The first volume of paint may be recovered from a conveyor belt.

According to a second aspect disclosed herein there is provided a method for paint recycling comprising moving a volume of paint to a container using a pump, determining the mass of the volume of paint in the container and determining an amount of at least one additive to include in the volume of paint based on the determined mass and volume of the paint.

The method may comprise moving the volume of paint from the first container to a second container using a second pump and adding the determined amount of additive to the volume of paint as it is moved from the first container to the second container.

The first pump may continuously move paint to the first container and the second pump may continuously move paint from the first container to the second container.

The method may comprise using a system as described in the first aspect.

Brief Description of the Drawings

To assist understanding of the present disclosure and to show how embodiments may be put into effect, reference is made by way of example to the accompanying drawings in which:

Figure 1 shows schematically an example of a known paint recovery system;

Figure 2 shows a schematic cross section of a first pump of a paint recycling system according to an example described herein;

Figure 3 shows a schematic cross section of a second pump of a paint recycling system according to an example described herein;

Figure 4 shows a block diagram of a paint recycling system according to an example described herein;

Figure 5 shows a flow chart of a method of operation of a paint recycling system according to an example described herein.

Detailed Description

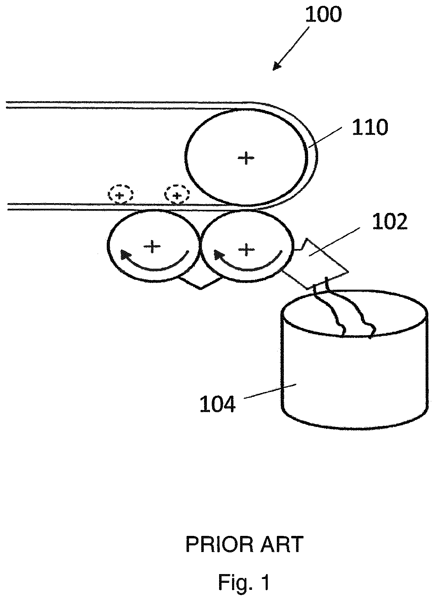

A known flat belt paint recovery system 100 is shown in Figure 1. A scraper 102 works against the movement of a conveyor belt 110 and scrapes paint from the conveyor belt 110 into a recovery tank 104. The paint may then be reused. In the system 100 the scraper 102 comprises a blade. Different kinds of scraper can be used to remove the paint from conveyor belt 110. The scrapers may comprise, for example stainless steel blades, as shown in Figure 1, cylinders or gut type ropes.

For recovered paint to be reusable, additives are included in the recovered paint. The dosing of the additives during processing of the recovered paint must be accurate.

Dosing systems dispense predefined amounts of material in a specified time period in a defined ratio. The ratio is based on the mass, not the volume, of the chosen ingredients. Dosing can be influenced by the type and properties of the input material, ambient conditions (temperature, humidity, etc.), the type of dosing device and whether a volumetric or gravimetric system is used. A volumetric dosing system doses material according to the space it occupies i.e. its volume; a gravimetric system determines the amount of material to be dosed by weight.

Volumetric dosing systems only measure the volume of the ingredients (in cubic centimetres or metres, for example). Because the dosing device does not weigh the components, the dosing device must be calibrated to ensure that the correct mass is dosed over a set period. This means it must be recalibrated every time a new material or batch is introduced. Volumetric systems cannot automatically make adjustments for fluctuations in properties such as input material bulk density. A gravimetric dosing system use material weight measurement. In the event of density changes it is necessary to change settings with respect to these changes.

A solvent may be applied to the conveyor belt 110 of a spray painting system (for example using a saturated cloth) to dissolve the paint on the belt for ease of removal. As a result, paint recovered from the conveyor belt 110 can have different densities, depending on the machine working cycle. If the dosing systems are based on volumetric or gravimetric measurement of the recovered paint, this can cause unexpected results in the recycling process.

Changes in the recycled paint because of incorrect dosing can result in waste paint production. An incorrect amount of solvent dosed into the recovered paint can cause disintegration in metallic components, resulting in colour changes for further usage. The wrong amount of dosing may cause an agglomeration and be unsuitable for reuse.

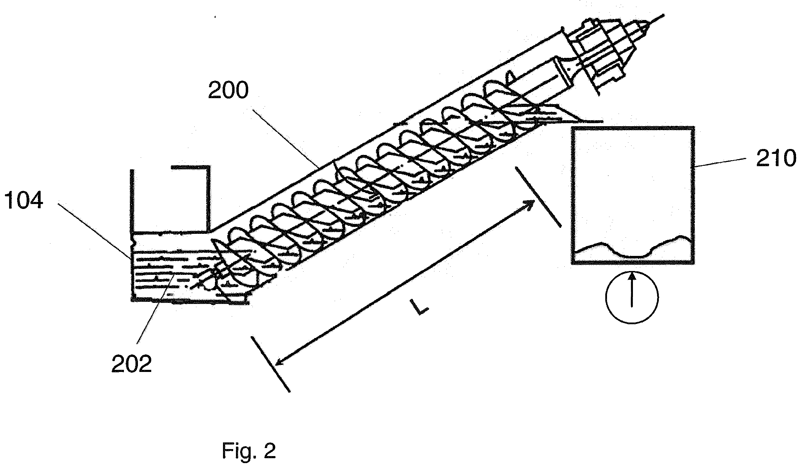

Figure 2 shows a first pump 200 of an example of a paint recycling system according to an aspect described herein. The pump 200 comprises a screw pump having a screw of length L. The pump 200 is configured to move a volume of recovered paint 202 to a first container 210. The paint may be recovered from a recovery can 104 as shown in Figure 1. The pump 200 has a pumping volume rate defined by screw pump dimensions, inter alia by screw length L and screw tooth size, shape and pitch.

The first container 210 is configured for determining the mass of a given volume of paint which is moved to the first container 210 by the pump 200 in a time unit. The first container 210 may comprise for example a weight measuring can.

The paint recycling system includes a controller (not shown in Figure 2) which may include one or more processors and a memory. The controller is provided with information indicative of the mass of the known volume of paint. The density of the recovered paint, A, as a function of the volume, V, and mass, M, can then be determined using equation 1.

$$A = V/M \qquad (1)$$

The controller is configured to determine the amount of additives to include in the volume of paint in dependence on determined density of the recovered paint (i.e. based on the volume of paint and the determined mass). Additives may include solvents, pigments etc.

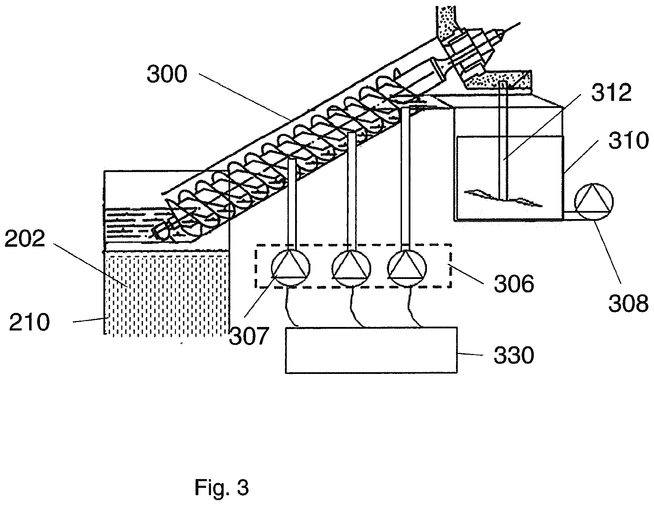

Figure 3 shows a second pump 300 of the paint recycling system. The second pump is configured to move the recovered paint 202 from the first container 210 to a second container 310. The second pump 300 may comprise a screw pump.

The second pump 300 is connected to a dosing unit 306. The dosing unit 306 comprises one or more dosing pumps 307 which are configured to introduce additives to the volume of paint as the paint is moved from the first container 210 to the second container 310. The pump 300 has the capability to mix the additives as it moves the recovered paint from the first container 210 to the second container 310 during pumping. Since the 300 pump moves the paint, the connection points between the dosing pumps 307 and pump 300 can be arranged at a number of different levels of the pump 300.

Although three pumps for three different additives are shown in the example of Figure 3, the dosing unit 306 may comprise any suitable number of dosing pumps 307 and perform multidosing for different formulations of paint.

Dosing unit 306 is connected to controller 330. The controller 330 is configured to send control messages to the dosing unit 306 to cause the dosing pumps 307 to perform dosing of additives to the paint in the second pump 300. The controller 330 may control the levels and timing of additive dosing. The selection of which additive is provided by which dosing pump may depend on whether the additive is solid or liquid.

The second container 310 comprises a pump 308 connected to a spray gun of a paint spraying system (not shown) such that paint can be moved from the second container 310 to the spray gun of the paint spraying system. The second container 310 comprises a stirrer 312 to stir the recovered paint and additives to provide a homogenous solution.

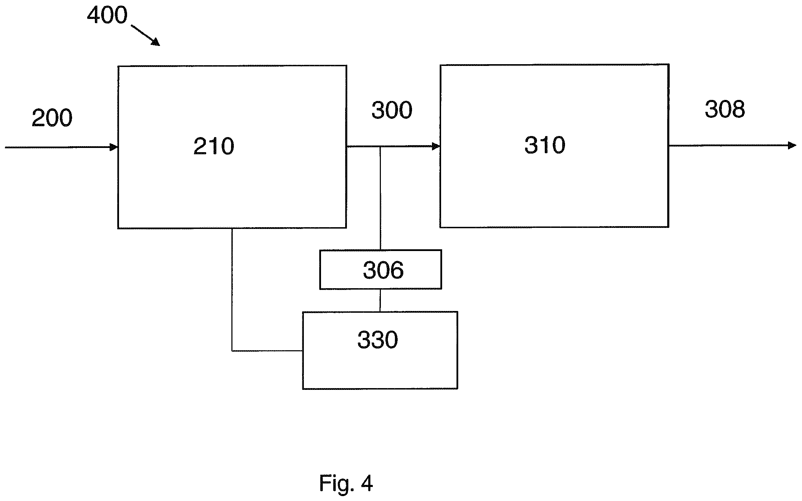

Figure 4 shows a block diagram of a system 400 for paint recycling in accordance with an embodiment. The system 400 includes the pump 200, first container 210, the pump 300, second container 310 and pump 308. The dosing unit 306 is connected to pump 300. The system 400 includes controller 330. The controller 330 is in communication with first container 210 and dosing unit 306.

In use, pump 200 moves a known volume of recovered paint to the first container 210. The first container 210 determines the mass of the recovered paint and provides an indication of the determined mass to the controller 330.

The controller 330 determines an amount of additives to include in the recovered paint based on the volume of the recovered paint and the determined mass. The controller 330 provides a control message to a dosing unit to control dosing of the one or more additives to the paint as the paint is moved from the first container 210 to the second container 310 using the second pump 300.

The recovered paint is then removed from the second container 310 using pump 308.

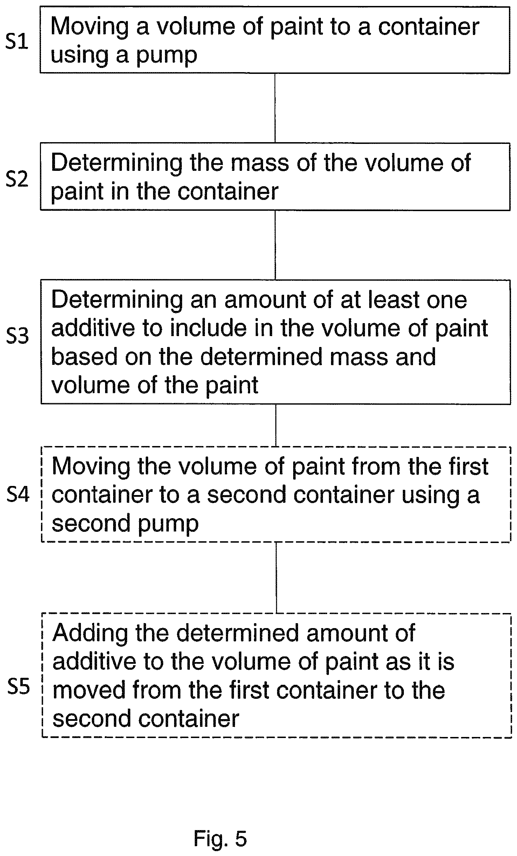

Figure 5 shows a control flow for a method of operation of a paint recycling system. In a first step, S1, the method comprises moving a volume of paint to a first container using a first pump.

In a second step, S2, the method comprises determining the mass of the volume of paint in the first container.

In a third step, S3, the method comprises determining an amount of at least one additive to include in the volume of paint based on the determined mass and volume of the paint.

In a fourth, optional, step, S4 the method comprises moving the volume of paint from the first container to a second container using a second pump.

In a fifth, optional, step, S5, the method comprises adding the determined amount of additive to the volume of paint as it is moved from the first container to the second container.

The method as described with reference to Figure 5 may be performed continuously. That is, the method may comprise moving a volume of recovered paint using pump 200 per unit time and adding a determined amount of additives to the volume of paint per unit time as the recovered paint moves along the second screw pump 300. The mass of a given volume of recovered paint in the first container 210 may be considered as an average given that the density may be constantly fluctuating.

Determining the amount of additive is based on the average density. Dosing of the additive may be timed so they are added as a given volume of paint moves through the screw pump 300. The screw pump 200 and screw pump 300 in combination may be described as a cascade continuous operated screw pump.

A paint recycling system and method as described herein has both volumetric and gravimetric dosing systems working together and provides an improved measurement system to calculate dosing requirements for recycled paints. The paint recycling system also provides an improved system for performing dosing for recycled paints.

Although the paint recycling system has been described with reference to a spray painting system, the paint recycling system may be suitable for use with paint recovered from any system in which waste paint is produced.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A system for paint recycling comprising:

    a pump (200) configured to move a volume of paint (202) to a first container (210), **characterized in that** the first container (210) is configured for determining the mass of the volume of paint; and
    a controller (330), wherein the controller (330) is configured to determine an amount of at least one additive to include in the volume of paint (202) based on the volume and determined mass of the paint.

2. A system according to claim 1, comprising a second pump (300) configured to move the volume of paint (202) from the first container (210) to a second container (310), wherein the determined amount of additive is added to the paint as it is moved from the first container to (210) the second container (310).

3. A system according to claim 2, comprising at least one dosing pump (307) configured to add the determined amount of additive to the paint, wherein the controller (330) is configured to control the at least one dosing pump to add the determined amount of additive to the paint.

4. A system according to claim 2 or claim 3, wherein the second container (310) comprises a mixer (312) for mixing paint and additives in the second container (310).

5. A system according to any of claims 2 to 4, wherein the second container (310) is in fluid communication with a spray gun.

6. A system according to any of claims 1 to 5, wherein the pump (200) configured to move a volume of paint to the first container (210) configured for determining the mass of the volume of paint comprises a screw pump.

7. A system according to claim 6, wherein the volume of paint is determined based on the dimensions of the screw pump.

8. A system according to any of claims 1 to 7, wherein the first volume of paint (202) is recovered from a conveyor belt.

9. A method for paint recycling comprising:

    moving a volume of paint (202) to a first container (210) using a pump (200);
    **characterized by**
    determining the mass of the volume of paint in the first container (210); and by determining an amount of at least one additive to include in the volume of paint based on the determined mass and volume of the paint.

10. A method according to claim 9, comprising moving the volume of paint from the first container (210) to a second container (310) using a second pump (300); adding the determined amount of additive to the volume of paint as it is moved from the first container (210) to the second container (310).

11. A method according to claim 10, wherein the first pump (200) continuously moves paint to the first container (210) and the second pump (300) continuously moves paint from the first container (210) to the second container (310).

## Patentansprüche

1. System zum Farbrecycling, aufweisend:

    eine Pumpe (200), die ausgestaltet ist, um ein Farbvolumen (202) zu einem ersten Behälter (210) zu bewegen,
    **dadurch gekennzeichnet, dass**
    der erste Behälter (210) ausgestaltet ist zum Ermitteln der Masse des Farbvolumens; und eine Steuerung (330), wobei die Steuerung (330) konfiguriert ist, um basierend auf dem Volumen und der ermittelten Masse der Farbe eine Menge von wenigstens einem in das Farbvolumen (202) einzufügenden Additiv zu bestimmen.

2. System nach Anspruch 1, aufweisend eine zweite Pumpe (300), die ausgestaltet ist, um das Farbvolumen (202) vom ersten Behälter (210) zu einem zweiten Behälter (310) zu bewegen, wobei die bestimmte Additivmenge der Farbe hinzugefügt wird, wenn sie vom ersten Behälter (210) zum zweiten Behälter (310) bewegt wird.

3. System nach Anspruch 2, aufweisend wenigstens eine Dosierpumpe (307), die ausgestaltet ist, um die bestimmte Additivmenge der Farbe hinzuzufügen, wobei die Steuerung (330) konfiguriert ist, um die wenigstens eine Dosierpumpe anzusteuern, um die bestimmte Additivmenge der Farbe hinzuzufügen.

**4.** System nach Anspruch 2 oder Anspruch 3, bei welchem der zweite Behälter (310) einen Mischer (312) zum Mischen von Farbe und Additiven im zweiten Behälter (310) aufweist.

**5.** System nach einem der Ansprüche 2 bis 4, bei welchem der zweite Behälter (310) mit einer Spritzpistole in Fluidverbindung steht.

**6.** System nach einem der Ansprüche 1 bis 5, bei welchem die Pumpe (200), die ausgestaltet ist, um ein Farbvolumen zum ersten Behälter (210) zu bewegen, der zum Ermitteln der Masse des Farbvolumens ausgestaltet ist, eine Schraubenpumpe aufweist.

**7.** System nach Anspruch 6, bei welchem das Farbvolumen basierend auf den Dimensionen der Schraubenpumpe ermittelt wird.

**8.** System nach einem der Ansprüche 1 bis 7, bei welchem das erste Farbvolumen (202) von einem Förderband rückgewonnen wird.

**9.** Verfahren zum Farbrecycling, aufweisend:

Bewegen eines Farbvolumens (202) zu einem ersten Behälter (210) unter Verwendung einer Pumpe (200),
**gekennzeichnet durch**
Ermitteln der Masse des Farbvolumens im ersten Behälter (210); und
Bestimmen einer Menge von wenigstens einem in das Farbvolumen einzufügenden Additiv basierend auf der ermittelten Masse und dem Volumen der Farbe.

**10.** Verfahren nach Anspruch 9, aufweisend:

Bewegen des Farbvolumens vom ersten Behälter (210) zu einem zweiten Behälter (310) unter Verwendung einer zweiten Pumpe (300);
Hinzufügen der bestimmten Additivmenge zum Farbvolumen, wenn es vom ersten Behälter (210) zum zweiten Behälter (310) bewegt wird.

**11.** Verfahren nach Anspruch 10, bei welchem die erste Pumpe (200) kontinuierlich Farbe zum ersten Behälter (210) bewegt und die zweite Pumpe (300) kontinuierlich Farbe vom ersten Behälter (210) zum zweiten Behälter (310) bewegt.

**Revendications**

**1.** Système de recyclage de peinture comprenant :

une pompe (200) qui est configurée pour déplacer un volume de peinture (202) vers un premier récipient (210),
**caractérisé en ce que** :

le premier récipient (210) est configuré pour déterminer la masse du volume de peinture ; et
le système comprend un contrôleur (330), dans lequel le contrôleur (330) est configuré pour déterminer une quantité d'au moins un additif à inclure dans le volume de peinture (202) sur la base du volume et de la masse déterminée de la peinture.

**2.** Système selon la revendication 1, comprenant une deuxième pompe (300) qui est configurée pour déplacer le volume de peinture (202) du premier récipient (210) vers un deuxième récipient (310), dans lequel la quantité déterminée d'additif est ajoutée à la peinture lorsqu'elle est déplacée du premier récipient (210) vers le deuxième récipient (310).

**3.** Système selon la revendication 2, comprenant au moins une pompe de dosage (307) qui est configurée pour ajouter la quantité déterminée d'additif à la peinture, dans lequel le contrôleur (330) est configuré pour commander ladite au moins une pompe de dosage afin d'ajouter la quantité déterminée d'additif à la peinture.

**4.** Système selon la revendication 2 ou 3, dans lequel le deuxième récipient (310) comprend un mélangeur (312) pour mélanger de la peinture et des additifs dans le deuxième récipient (310).

**5.** Système selon l'une quelconque des revendications 2 à 4, dans lequel le deuxième récipient (310) est en communication fluidique avec un pistolet de pulvérisation.

**6.** Système selon l'une quelconque des revendications 1 à 5, dans lequel la pompe (200), qui est configurée pour déplacer un volume de peinture vers le premier récipient (210) qui est configuré pour déterminer la masse du volume de peinture, comprend une pompe à vis.

**7.** Système selon la revendication 6, dans lequel le volume de peinture est déterminé sur la base des dimensions de la pompe à vis.

**8.** Système selon l'une quelconque des revendications 1 à 7, dans lequel le premier volume de peinture (202) est récupéré à partir d'un convoyeur à bande.

**9.** Procédé de recyclage de peinture consistant à :

déplacer un volume de peinture (202) vers un premier récipient (210) à l'aide d'une pompe (200),
**caractérisé en ce qu'**il consiste à :

déterminer la masse du volume de peinture dans le premier récipient (210) ; et déterminer une quantité d'au moins un additif à inclure dans le volume de peinture sur la base de la masse déterminée et du volume de la peinture.

10. Procédé selon la revendication 9, consistant à :

déplacer le volume de peinture du premier récipient (210) vers un deuxième récipient (310) à l'aide d'une deuxième pompe (300) ; ajouter la quantité déterminée d'additif au volume de peinture lorsqu'il est déplacé du premier récipient (210) vers le deuxième récipient (310).

11. Procédé selon la revendication 10, dans lequel la première pompe (200) déplace en continu la peinture vers le premier récipient (210) et la deuxième pompe (300) déplace en continu la peinture du premier récipient (210) vers le deuxième récipient (310).

PRIOR ART

Fig. 1

Fig. 2

Fig. 3

Fig. 4

S1 | Moving a volume of paint to a container using a pump

S2 | Determining the mass of the volume of paint in the container

S3 | Determining an amount of at least one additive to include in the volume of paint based on the determined mass and volume of the paint

S4 | Moving the volume of paint from the first container to a second container using a second pump

S5 | Adding the determined amount of additive to the volume of paint as it is moved from the first container to the second container

Fig. 5

**EP 3 505 259 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 4415563